# EUROPÄISCHE PATENTSCHRIFT

(11) **EP 0 828 569 B1**
(45) Veröffentlichungstag und Bekanntmachung des Hinweises auf die Patenterteilung: **18.09.2002**
(21) Anmeldenummer: 96919733.4
(22) Anmeldetag: 09.05.1996
(51) Int. Cl.: B05D 7/04, B32B 15/08, B05D 7/00

(54) **MIT MEHREREN SCHICHTEN BESCHICHTETE FOLIEN UND DEREN VERWENDUNG IM AUTOMOBILBAU**
FILMS PROVIDED WITH SEVERAL COATING LAYERS AND THE USE THEREOF IN AUTOMOBILE MANUFACTURING
FILMS POURVUS DE PLUSIEURS COUCHES DE REVETEMENT ET LEUR UTILISATION DANS LA CONSTRUCTION AUTOMOBILE

(30) Priorität: 10.05.1995 DE 19517068
(43) Veröffentlichungstag der Anmeldung: 18.03.1998
(73) Patentinhaber: BASF Coatings Aktiengesellschaft, 48165 Münster (DE)
(72) Erfinder: KIRIAZIS, Leonidas, D-48151 Münster (DE); WEGNER, Egon, D-48143 Münster (DE)
(74) Vertreter: Fitzner, Uwe, Dr.
(86) Internationale Anmeldenummer: EP9601956
(87) Internationale Veröffentlichungsnummer: WO96035518

(56) Entgegenhaltungen:
- EP-A- 0 285 071
- EP-A- 0 361 823
- EP-A- 0 395 226
- US-A- 4 933 237
- US-A- 5 268 215

## Beschreibung

Die vorliegende Erfindung betrifft ein Verfahren zur Herstellung von mit Folien beschichteten Formteilen, mit mehreren Schichten beschichtete Folien und die Verwendung der Folien im Automobilbau.

In der EP-A-374 551 werden beschichtete Substrate offenbart, die zur Herstellung von Anbauteilen für Automobilkarosserien geeignet sind. Die in der EP-A-374 551 beschriebenen beschichteten Substrate bestehen aus Metallblechen, die mit mindestens einer Lackschicht lackiert sind oder aus Verbundwerkstoffen, deren Oberflächenschicht aus den lackierten Metallblechen besteht.

Aus der P4424290.9 sind mit mehreren Schichten beschichtete Substrate bekannt. Diese werden verformt und ggf. mit Hilfe von weiteren Materialien weiterverarbeitet. Auf diese Weise können Anbauteile für Fahrzeugkarosserien hergestellt werden.

Aus der EP 0 395 226 sind beschichtete Folien zur Herstellung von Anbauteilen für die Automobilkarosserien bekannt. Diese beschichteten Folien weisen eine Kleberschicht auf, welche die Haftung einer aus einem Farblack und Klarlack bestehenden Farbschicht an einer Trägerfolie vermittelt.

Der vorliegenden Erfindung lag die Aufgabe zugrunde, mit mehreren Schichten beschichtete Folien bereitzustellen, die auf die Formteilrohlinge aufbringbar sind, die gegenüber den in der EP-A-374 551 offenbarten beschichteten Substraten verbesserte Eigenschaften aufweisen, bei deren Herstellung nur geringe Mengen an Lösemitteln emittiert werden und eine einfache Qualitätsüberwachung möglich ist.

Diese Aufgabe wird erfindungsgemäß durch die Bereitstellung eines Verfahrens zur Herstellung von mit Folien beschichteten Formteilen gelöst, wobei
A zunächst schrittweise eine beschichtete Folie hergestellt wird, wobei
   i) die Oberfläche einer Kunststoffolie mit einer Dicke von 10 bis 500 µm ggf. mit einer Füllerzusammensetzung lackiert wird,
   ii) die Oberfläche der Kunststoffolie oder ggf. die Oberfläche der Füllerzusammensetzung mit mindestens einer pigmentierten Lackschicht überlackiert wird,
   iii) die pigmentierte Lackschicht ggf. mit einem transparenten Lack überlackiert wird, dadurch gekennzeichnet, daß
B anschließend diese fertig beschichtete und noch ungeformte Folie direkt auf ein noch ungeformtes Substrat, vorzugsweise ein Metallträger, kaschiert wird und
C aus dem so beschichteten ungeformten Substrat Formteile hergestellt werden.

Ferner betrifft die vorliegende Erfindung ein Verfahren der zuvor genannten Art, bei dem die Aushärtung der Füllerzusammensetzung vor dem Überlackieren mit mindestens einer pigmentierten Lackschicht durchgeführt wird oder die Aushärtung der pigmentierten Lackschicht vor dem Überlackieren mit einer transparenten Lackschicht durchgeführt wird.

Die vorliegende Erfindung betrifft auch ein Verfahren, bei dem nach Stufe C oder Stufe III) eine abziehbare Kunststoffolie aufgetragen wird und/oder bei dem auf die nicht lackierte Seite der Trägerfolie ggf. eine abziehbare Folie aufgetragen wird.

Bei dem erfindungsgemäßen Verfahren wird in Stufe A oder Stufe I) eine thermoplastische Polyolefinfolie oder eine thermoplastische Polyurethanfolie eingesetzt.

Bei der Herstellung der erfindungsgemäß beschichteten Formteile kann in Stufe A oder Stufe I) eine Folie aus einem Polyolefin, einem Polyamid, einem Polyurethan, einem Polyester, einem Polyacrylat, einem Polycarbonat oder einer Mischung aus unterschiedlichen polymeren Stoffen eingesetzt werden. Die in Stufe A oder Stufe I) eingesetzte Kunststoffolie weist eine Dicke von 10-500, vorzugsweise 20-250 µm auf und kann Farbstoffe und/oder Pigmente enthalten.

Entsprechende Materialien sind auch als abziehbare Folie einsetzbar.

Sofern die Kunststoffolie zusätzlich mit einer Füllerzusammensetzung lackiert werden soll, werden vorzugsweise zur Lackierung von Automobilkarosserien geeignete Füllerzusammensetzungen verwendet. Allerdings ist ebenso wie bei den o.g. Lacken eine ausreichende Flexibilität für das Zusammenrollen erforderlich. Diese kann über den Vernetzungsgrad gesteuert werden.

Ein weiterer Gegenstand der vorliegenden Erfindung sind Folien mit einer Dicke von 10 bis 500 µm, beschichtet mit wenigstens einer pigmentierten Lackschicht, die ihrerseits ggf. mit einer transparenten Lackschicht überlackiert sind, wobei zwischen einer Kunststoffolie und der pigmentierten Lackschicht eine Füllerzusammensetzung aufgebracht ist.

Weiter betrifft die vorliegende Erfindung beschichtete Folien der zuvor genannten Art, wobei über die transparente Lackschicht eine abziehbare Kunststoffolie aufgebracht ist.

Gegenstand der vorliegenden Erfindung sind auch beschichtete Folien der zuvor genannten Art, wobei die Kunststoffolie eine thermoplastische Polyolefinfolie oder eine thermoplastische Polyurethanfolie ist.

Ein weiterer Gegenstand der vorliegenden Erfindung sind beschichtete Folien der zuvor genannten Art, dadurch gekennzeichnet, dass sie zur Beschichtung von Fahrzeugkarosserien, vorzugsweise Automobilkarosserien und Haushaltsgeräten, vorzugsweise Kühlschränken, Wasch- und Geschirrspülmaschinen, verwendet werden.

Es werden erfindungsgemäß vorzugsweise für Automobilkarosserien geeignete Füllerzusammensetzungen und Lacke eingesetzt, die eine gute Flexibilität besitzen, d.h. die ausgehärteten Beschichtungssysteme weisen T-Bend-Werte ≤ 3,0, vorzugsweise ≤ 2,0, besonders bevorzugt ≤ 1,0 auf.

Die mit den erfindungsgemäßen Folien beschichteten Karosserien zeichnen sich durch eine sehr hohe Resistenz gegenüber Steinschlag und Korrosion aus. Weitere Vorteile der erfindungsgemäßen beschichteten Folien bestehen darin, daß sie auf Anlagen mit einem geringen Raumbedarf herstellbar sind, daß bei der Beschichtung von Formteilrohlingen mit den erfindungsgemäßen, lackierten Kunststoffolien nur sehr geringe Mengen an organischen Lösemitteln emittiert werden und daß die Qualitätsüberwachung schon bei der lackierten Kunststoffolie einsetzen kann. Hingegen kann beim konventionellen Lackieren von Metallblechen die Qualität der Beschichtung erst nach Applikation der Lackschichten auf das Substrat beurteilt werden, so daß im Falle von Qualitätsmängeln das lackierte Substrat als Ganzes verworfen werden muß.

Bei der konventionellen Lackierung von Automobilkarosserien wird die mittels Elektrotauchlackierung aufgebrachte Grundierung mit einer Füllerzusammensetzung überlackiert. Die auf diese Weise erhaltene Füllerschicht hat im wesentlichen zwei Aufgaben: Zum einen soll sie die Unebenheiten der Elektrotauchgrundierung ausgleichen und zum anderen die Steinschlagbeständigkeit der Gesamtlackierung verbessern. Füllerzusammensetzungen zur Herstellung von Füllerschichten bei der Automobilkarosserielackierung sind in großer Vielzahl bekannt und brauchen daher hier im Detail nicht weiter beschrieben zu werden. Füllerzusammensetzungen bestehen im wesentlichen aus einem Bindemittel, einem Vernetzungsmittel, Pigmenten und Füllstoffen sowie ggf. weiteren Additiven, wie z.B. Vernetzungskatalysatoren und Verlaufshilfsmittel. Die einsetzbaren Füllerzusammensetzungen können als Bindemittel beispielsweise Epoxidharze, Polyesterharze, Polyurethanharze, Polyacrylatharze und Alkydharze oder Kombinationen aus solchen Harzen enthalten.

Als Vernetzungsmittel können die einsetzbaren Füllerzusammensetzungen Aminoplastharze, wie z.B. Melamin-Formaldehydharze, Amine, Polyisocyanate und Carboxylgruppen enthaltende Verbindungen enthalten. Als Beispiele für Pigmente, die in den einsetzbaren Füllerzusammensetzungen enthalten sein können, werden Titandioxid, Phthalocyanine, Eisenoxide und Ruß genannt. Als Füllstoffe können die Füllerzusammensetzungen beispielsweise Kalk oder Bariumsulfat enthalten.

Die mit den erfindungsgemäßen Folien beschichteten Formteile, insbesondere Fahrzeugkarosserien, weisen überraschenderweise auch dann eine gute Resistenz gegenüber Steinschlag auf, wenn in Stufe A oder Stufe III) keine Füllerzusammensetzung aufgebracht wird.

Auf die Oberfläche der Kunststoffolie bzw. auf die nach Durchführung der Stufe A i) erhaltene Füllerschicht wird entweder mindestens eine pigmentierte Decklackschicht oder eine sogenannte Basecoat-Clearcoat-Lackierung, die aus einer pigmentierten Basislackschicht und einer überlackierten transparenten Lackschicht besteht, aufgebracht.

Es kann jeder für die konventionelle Lackierung von Automobilkarosserien geeignete Decklack bzw. Basislack verwendet werden, sofern er die für die erfindungsgemäßen Zwecke ausreichende Flexibilität besitzt. Derartige Lacke sind dem Fachmann gut bekannt. Sie enthalten im wesentlichen ein polymeres Bindemittel, ggf. ein Vernetzungsmittel sowie ein Pigment oder eine Mischung aus Pigmenten. Der in Stufe A ii) eingesetzte Decklack bzw. Basislack kann als Bindemittel beispielsweise ein Polyesterharz, ein Polyurethanharz oder ein Polyacrylatharz oder eine Mischung aus solchen Bindemitteln enthalten. Als Vernetzungsmittel kann der Decklack bzw. Basislack ein Aminoplastharz, ein Polyisocyanatharz, ein Carboxylgruppen enthaltendes Vernetzungsmittel oder eine Mischung aus solchen Vernetzungsmitteln enthalten. Als Beispiele für Pigmente, die in der in Stufe A ii) aufgebrachten pigmentierten Decklackschicht bzw. Basislackschicht enthalten sein können, werden Titandioxid, Phthalocyaninpigmente, Ruß, Eisenoxidpigmente, Aluminiumplättchenpigmente und Perlglanzpigmente genannt.

Wenn die erfindungsgemäßen beschichteten Substrate mit einer Basecoat-Clearcoat-Lackierung versehen werden sollen, wird in Stufe A iii) auf die in Stufe A ii) applizierte Lackschicht eine transparente Lackschicht aufgetragen. Auch hier können alle für die konventionelle Automobillackierung einsetzbaren transparenten Lacke mit einer für die Zwecke der Erfindung ausreichenden Flexibilität eingesetzt werden. Es können auch Pulverklarlacke verwendet werden. Auch die in Stufe A iii) aufgetragenen transparenten Lacke bestehen aus einem Bindemittel, einem Vernetzungsmittel und weiteren üblichen Additiven. Derartige Lacke sind in großer Auswahl im Handel erhältlich und dem Fachmann gut bekannt. Sie brauchen daher an dieser Stelle nicht näher beschrieben zu werden.

Die Aushärtung der Füllerzusammensetzung kann vor dem Überlackieren mit mindestens einer pigmentierten Lackschicht durchgeführt werden. Auch die Aushärtung der pigmentierten Lackschicht kann vor dem Überlackieren mit einer transparenten Lackschicht durchgeführt werden. Es ist auch möglich, die in Stufe A i) aufgetragene Füllerschicht in nicht-ausgehärtetem Zustand mit einer Basislackschicht überzulackieren und sodann vor dem Auftragen der transparenten Lackschicht Füller-und Basislackschicht gemeinsam auszuhärten. Die Aushärtung der Lackschichten erfolgt üblicherweise durch Erhitzen auf Temperaturen von 60 bis 230°C. Dabei kommt es zu einer Reaktion zwischen den in den Lacken enthaltenen Bindemitteln und Vernetzungsmitteln, und es werden dreidimensionale polymere Netzwerke gebildet, die der Lackoberfläche eine besonders hohe Resistenz gegenüber mechanischen oder chemischen Angriffen verleihen.

Die Applikation der Lackschichten kann beispielsweise durch Spritzen, Walzen oder Rakeln erfolgen.

Die erfindungsgemäßen Folien lassen sich zusammenrollen. Daher können die Produkte in Form von Rollen angeboten und geliefert werden. Aus diesem Grunde müssen die erfindungsgemäß verwendeten Lacke eine für das Zusammenrollen ausreichende Flexibilität aufweisen.

Die Folien können im Prinzip auf alle Formteilrohlinge, vorzugsweise Metallbleche, die zur Herstellung von Fahrzeugkarosserien sowie zur Herstellung von Anbauteilen für Fahrzeugkarosserien geeignet sind, aufgebracht werden. Vorwiegend werden die Folien auf vorbehandelte Metallbleche aufgebracht. Diese können beispielsweise durch Phosphatierung und/oder Chromatierung vorbehandelt sein.

Die wie oben beschrieben hergestellten lackierten Kunststoffolien können auf die Oberfläche eines Formteilrohlings, d.h. vorzugsweise noch nicht verformte Metallbleche, laminiert werden. Hierbei kann zunächst die Folie auf das nicht verformte Substrat laminiert, anschließend verformt und schließlich lackiert werden.

Die Anforderungen an die Flexibilität der eingesetzten Lacke müssen folglich auch an den beschriebenen Applikationsverfahren ausgerichtet werden. Insbesondere müssen sie auch bei Verformungen der Bleche eine gute Stabilität aufweisen.

Die Haftung zur zu beschichtenden Oberfläche kann auf unterschiedliche Weise bewerkstelligt werden. Eine Möglichkeit besteht beispielsweise darin, daß Folien, die haftungsvermittelnde Gruppen, wie z.B. Urethangruppen, Säureanhydridgruppen oder Carboxylgruppen aufweisen oder Folien, die durch Coextrusion mit einem haftungsvermittelnde Gruppen aufweisenden Polymer mit haftungsvermittelnden Gruppen versehen worden sind, eingesetzt werden. Die Haftung zwischen der Folie und der zu beschichtenden Oberfläche kann auch durch Verwendung eines Klebstoffes erreicht werden. Hierbei können sowohl bei Raumtemperatur feste als auch bei Raumtemperatur flüssige Klebstoffe zum Einsatz kommen.

Das Auflaminieren der lackierten Kunststoffolien kann nach allgemein gut bekannten Verfahren erfolgen. Beim Auflaminieren von Folien mit haftungsvermittelnden Gruppen wird im allgemeinen das Substrat mit der Folie derart bedeckt, daß die Haftvermittlerschicht die Substratoberfläche berührt. Durch Anwendung von Druck und Wärme wird sodann die Folie auf die zu beschichtende Oberfläche auflaminiert. Druck und Temperatur sind dabei so zu wählen, daß eine feste Verbindung zwischen dem Substrat und der Folie entsteht. Bei Verwendung von bei Raumtemperatur festen Klebstoffen wird ähnlich vorgegangen. Wenn flüssige Klebstoffe zur Anwendung kommen, wird im allgemeinen so vorgegangen, daß der flüssige Klebstoff auf das Substrat appliziert wird und die lackierte Kunststoffolie auf das erhitzte, mit dem Klebstoff beschichtete Substrat auflaminiert wird.

Die Erfindung wird in den folgenden Ausführungsbeispielen näher erläutert. Alle Angaben über Prozente und Teile sind als Gewichtsangaben zu verstehen, es sei denn, es wird ausdrücklich etwas anderes angegeben.

### Beispiel 1

Eine weißpigmentierte thermoplastische 60 µm dicke Polyurethanfolie (Elastollan® EL 1184A der Firma Elastogran GmbH) wird auf einem Metallblech fixiert und mit einem handelsüblichen weißpigmentierten nichtwäßrigen Decklack lackiert (Trockenfilmdicke: 45-50 µm). Die applizierte Lackschicht wird dann bei 130°C 30 Minuten lang eingebrannt. Die so lackierte Folie wird vom Metallträger abgelöst und bei einer Temperatur von 220° C und einem Druck von 50 bar auf ein Karosserieblech (Bonder 2660 OC) kaschiert.

### Beispiel 2

Eine weißpigmentierte thermoplastische 60 µm dicke Polyurethanfolie (Elastollan® EL 1184A der Firma Elastogran GmbH) wird auf einem Metallblech fixiert und mit einem handelsüblichen weißpigmentierten nichtwäßrigen Decklack lackiert (Trockenfilmdicke: 15-20 µm). Nach einer Ablüftzeit von 10 min wird die weiße Decklackschicht mit einem handelsüblichen Klarlack auf Basis Polyacrylat/Polyisocyanat überlackiert (Trockenfilmdicke 40 bis 50 µm) und anschließend werden beide Lackschichten bei 130° C 30 Minuten lang eingebrannt. Die so lackierte Folie wird vom Metallträger abgelöst und bei einer Temperatur von 220° C und einem Druck von 50 bar auf ein Karosserieblech (Bonder 2660 OC) kaschiert.

### Prüfung der beschichteten Substrate

Die gemäß Beispiel 1 bis 2 hergestellten beschichteten Substrate zeigten sowohl im VDA Steinschlagtest (2x500g bei 2bar) als auch im Mercedes Benz-Kugelschußtest ausgezeichnete Resistenzwerte (VDA: Note 1; Kugelschußtest: Rostgrad=0, Abplatzgrad: ≤ 2 mm²). Zur Prüfung der Korrosionsbeständigkeit wurden die beschichteten Substrate mit einem ca. 10 cm langen Ritz, dessen Tiefe bis zum Blech reicht, versehen und einer Salzsprühnebelprüfung nach DIN 50 021 unterworfen. Nach 6 Wochen war keine Unterrostung am Ritz feststellbar.

## Patentansprüche

1. Verfahren zur Herstellung von mit Folien beschichteten Formteilen, wobei
A zunächst schrittweise eine beschichtete Folie hergestellt wird, wobei
i) die Oberfläche einer Kunststoffolie mit einer Dicke von 10 bis 500 µm ggf. mit einer Füllerzusammensetzung lackiert wird,
ii) die Oberfläche der Kunststoffolie oder ggf. die Oberfläche der Füllerzusammensetzung mit mindestens einer pigmentierten Lackschicht überlackiert wird,
iii) die pigmentierte Lackschicht ggf. mit einem transparenten Lack überlackiert wird,
**dadurch gekennzeichnet, daß**
B anschließend diese fertig beschichtete und noch ungeformte Folie direkt auf ein noch ungeformtes Substrat, vorzugsweise ein Metallträger, kaschiert wird und
C aus dem so beschichteten ungeformten Substrat Formteile hergestellt werden.

2. Verfahren gemäß einem der Ansprüche 1, **dadurch gekennzeichnet, daß** die Aushärtung der Füllerzusammensetzung vor dem Überlackieren mit mindestens einer pigmentierten Lackschicht durchgeführt wird.

3. Verfahren gemäß einem der Ansprüche 1, **dadurch gekennzeichnet, daß** die Aushärtung der pigmentierten Lackschicht vor dem Überlackieren mit einer transparenten Lackschicht durchgeführt wird.

4. Verfahren nach einem der Ansprüche 1-3, **dadurch gekennzeichnet, daß** nach Stufe C oder Stufe III) eine abziehbare Kunststoffolie aufgetragen wird.

5. Verfahren nach einem der Ansprüche 1-4, **dadurch gekennzeichnet, daß** in Stufe A oder Stufe I) eine thermoplastische Polyolefinfolie oder eine thermoplastische Polyurethanfolie eingesetzt wird.

6. Folien mit einer Dicke von 10 bis 500 um, beschichtet mit wenigstens einer pigmentierten Lackschicht, die ihrerseits gegebenenfalls mit einer transparenten Lackschicht überlackiert sind, **dadurch gekennzeichnet, daß** zwischen einer Kunststoffolie und der pigmentierten Lackschicht eine Füllerzusammensetzung aufgebracht ist.

7. Beschichtete Folien nach Anspruch 6, **dadurch gekennzeichnet, daß** über die transparente Lackschicht eine abziehbare Kunststoffolie aufgebracht ist.

8. Beschichtete Folien nach einem der Ansprüche 6 oder 7, **dadurch gekennzeichnet, daß** die Kunststoffolie eine thermoplastische Polyolefinfolie oder eine thermoplastische Polyurethanfolie ist.

9. Beschichtete Folien nach einem der Ansprüche 6-8, **dadurch gekennzeichnet, daß** sie zur Beschichtung von Fahrzeugkarosserien, vorzugsweise Automobilkarosserien und Haushaltsgeräten, vorzugsweise Kühlschränken, Wasch- und Geschirrspülmaschinen, verwendet werden.

## Claims

1. A process for producing moldings coated with films, wherein
A first of all a coated film is produced in steps, in the course of which
i) the surface of a plastic film having a thickness of from 10 to 500 ·m is coated if desired with a filler composition,
ii) the surface of the plastic film, or if desired the surface of the filler composition, is overcoated with at least one pigmented paint coat,
iii) the pigmented paint coat is overcoated if desired with a transparent coating,
**characterized in that**
B subsequently this ready-coated but still unformed film is laminated directly onto a still unformed substrate, preferably a metal carrier, and
C moldings are produced from the unformed substrate thus coated.

2. The process as claimed in one of claims 1 [sic], wherein the filler composition is cured before being overcoated with at least one pigmented paint coat.

3. The process as claimed in one of claims 1 [sic], **characterized in that** the curing of the pigmented paint coat is carried out before overcoating with a transparent paint.

4. The process as claimed in one of claims 1-3, wherein a plastic film which can be peeled off is applied after step C or step III).

5. The process as claimed in one of claims 1-4, wherein a thermoplastic polyolefin film or a thermoplastic polyurethane film is employed in step A or step I).

6. A film having a thickness of from 10 to 500 µm, coated with at least one pigmented paint coat, which in turn are overcoated if desired with a transparent paint coat, **characterized in that** a filler composition has been applied between one plastic film and the pigmented paint coat.

7. A coated film as claimed in claim 6, **characterized in that** a plastic film which can be peeled off has been applied over the transparent paint coat.

8. A coated film as claimed in one of claims 6 or 7, **characterized in that** the plastic film is a thermoplastic polyolefin film or a thermoplastic polyurethane film.

9. A coated film as claimed in one of claims 6 to 8, which is used for coating vehicle bodies, preferably car bodies and domestic appliances, preferably refrigerators, washing machines and dishwashers.

## Revendications

1. Procédé pour la fabrication de pièces usinées revêtues de pellicules, dans lequel
A. on fabrique d'abord par étapes une pellicule revêtue,
i) la surface d'une pellicule de matière plastique, d'une épaisseur de 10 à 500 µm, étant éventuellement revêtue d'une composition d'apprêt de garnissage,
ii) la surface de la pellicule de matière plastique ou éventuellement la surface de la composition d'apprêt de garnissage étant recouverte d'au moins une couche de peinture pigmentée,
iii) la couche de peinture pigmentée étant éventuellement recouverte d'un vernis transparent,
**caractérisé en ce que**
B. cette pellicule revêtue finale, et encore non déformée, est ensuite directement contrecollée sur un support non déformé, de préférence un support métallique, et
C. des pièces usinées sont fabriquées à partir du support non déformé ainsi revêtu.

2. Procédé selon la revendication 1, **caractérisé en ce que** le durcissement de la composition d'apprêt de garnissage est effectué avant le recouvrement avec au moins une couche de peinture pigmentée.

3. Procédé selon la revendication 1, **caractérisé en ce que** le durcissement de la couche de peinture pigmentée est effectué avant le recouvrement avec une couche de vernis transparent.

4. Procédé selon l'une quelconque des revendications 1 à 3, **caractérisé en ce que**, après l'étape C ou l'étape III), une pellicule de matière plastique détachable est appliquée.

5. Procédé selon l'une quelconque des revendications 1 à 4, **caractérisé en ce que**, dans l'étape A ou l'étape I), on utilise une pellicule polyoléfinique thermoplastique ou une pellicule de polyuréthanne thermoplastique.

6. Pellicules ayant une épaisseur de 10 à 500 µm, revêtues d'au moins une couche de peinture pigmentée, qui pour sa part est éventuellement recouverte d'une couche de vernis transparent, **caractérisées en ce qu'**une composition d'apprêt de garnissage est appliquée entre une pellicule de matière plastique et la couche de peinture pigmentée.

7. Pellicules revêtues selon la revendication 6, **caractérisées en ce qu'**une pellicule de matière plastique détachable est appliquée sur la couche de vernis transparent.

8. Pellicules revêtues selon la revendication 6 ou 7, **caractérisées en ce que** la pellicule de matière plastique est une pellicule polyoléfinique thermoplastique ou une pellicule de polyuréthanne thermoplastique.

9. Pellicules revêtues selon l'une quelconque des revendications 6 à 8, **caractérisées en ce qu'**elles sont utilisées pour le revêtement de carrosseries de véhicules, de préférence, de carrosseries d'automobiles et d'appareils domestiques, de préférence des réfrigérateurs, des machines à laver le linge et la vaisselle.
